# EUROPÄISCHE PATENTSCHRIFT

(11) **EP 1 025 951 B1**
(45) Veröffentlichungstag und Bekanntmachung des Hinweises auf die Patenterteilung: **14.11.2001**
(21) Anmeldenummer: 99125073.9
(22) Anmeldetag: 16.12.1999
(51) Int. Cl.: B23Q 1/00, B25B 5/06

(54) **Spanneinrichtung**
Clamping device
Dispositif de serrage

(30) Priorität: 20.01.1999 DE 19901977
(43) Veröffentlichungstag der Anmeldung: 09.08.2000
(73) Patentinhaber: Vischer & Bolli AG, 8600 Dübendorf 1 (CH)
(72) Erfinder: Etter, Ernst, 8800 Thalwil (CH)
(74) Vertreter: Paul, Dieter-Alfred, Dipl.-Ing.

(56) Entgegenhaltungen:
- EP-A- 0 827 805
- EP-A- 0 858 862
- DE-A- 3 322 232
- DE-A- 4 135 418
- PATENT ABSTRACTS OF JAPAN vol. 1995, no. 01, 28. Februar 1995 (1995-02-28) & JP 06 297277 A (BROTHER IND LTD), 25. Oktober 1994 (1994-10-25)

## Beschreibung

Die vorliegende Erfindung betrifft eine Spanneinrichtung zur Fixierung eines Einzugsbolzens an einem Maschinentisch, einer Grundplatte oder dergleichen, mit einem Kolben, der axial verstellbar in einer Ausnehmung des Maschinentisches angeordnet und hydraulisch betätigbar ist, und einem am Maschinentisch fixierbaren Deckel, um die Ausnehmung zu verschließen, wobei der Kolben und/oder der Deckel eine Aufnahme bilden, in die ein Einzugsbolzen durch den Deckel eingesetzt werden kann und in der er mittels eines durch Verstellung des Kolbens betätigbaren Spannmechanismus fixierbar ist. DE-A-4135418 offenbart eine derartige Spanneinrichtung.

Die Bearbeitung von Werkstücken ist häufig sehr komplex und kann eine Vielzahl von zerspanenden und spanlosen Arbeitsgängen an unterschiedlichen Bearbeitungsmaschinen umfassen, um aus einem Rohling das fertige Bauteil herzustellen. Bei allen Fertigungsabläufen ist dabei wesentlich, daß das Werkstück bei jedem Arbeitsgang eine definierte Lage an der jeweiligen Werkzeugmaschine einnimmt.

Zu diesem Zweck ist es in der Praxis üblich, das zu bearbeitende Werkstück zunächst auf eine Trägerpalette aufzuspannen und dann die ganze Einheit über mehrere Einzugsbolzen, die an der Rückseite der Trägerpalette vorgesehen und als Zentrierelemente ausgebildet sind, an der jeweiligen Werkzeugmaschine festzuspannen, indem die Einzugsbolzen in entsprechende Schnellspanneinheiten, die am Maschinentisch vorgesehen sind, eingesetzt werden. In der Produktion kann auf diese Weise die Lage der Schnellspanneinrichtungen als fester Maschinenparameter berücksichtigt werden, so daß es lediglich erforderlich ist, jeweils das Werkstück exakt an der Trägerpalette zu positionieren. Das eigentliche Fest- und Umspannen der Einheit aus Werkstück und Trägerpalette an den Maschinen kann dann sehr schnell und unproblematisch erfolgen, ohne daß eine weitere Positionierung notwendig ist.

Die bekannten mechanisch/hydraulischen Spanneinrichtungen, von denen die vorliegende Erfindung ausgeht, sind entweder als sogenannte Aufbauzylinder, die geschlossene Einheiten bilden und auf einem Maschinentisch, eine Grundplatte oder dergleichen aufgespannt werden können, oder als sogenannte Einbauzylinder, die in den Maschinentischen, Schnellverschlußplatten, Würfeln etc. versenkt werden können, ausgebildet. Die bekannten Einbauzylinder werden dabei in eine Ausnehmung des Maschinentischs oder einen entsprechenden Grundkörper direkt eingesetzt, wobei dann zwischen dem Einbauzylinder und der Ausnehmung des Maschinentischs ein Druckraum gebildet wird, der zum Lösen der Spanneinrichtung mit einem Hydraulikmittel beaufschlagbar ist.

Die Verwendung solcher Einbauzylinder gestaltet sich oftmals problematisch, da die Maschinentische häufig nicht die nötige Gußqualität besitzen, so daß die Aufnahmen nicht mit der notwendigen Genauigkeit herstellbar sind und somit Abdichtungsprobleme auftreten. Außerdem kann durch die Lunkerbildungen die Lebensdauer der Kolben der Spanneinrichtungen beziehungsweise die Lebensdauer der Abdichtungen zum Teil stark leiden. Hinzu kommt, daß die Spannkräfte in den Maschinentisch, Grundkörper oder dergleichen, eingeleitet werden, so daß es dort zu Verspannungen kommen kann.

Aufgabe der vorliegenden Erfindung ist es daher, eine für den Einbau in einen Maschinentisch oder dergleichen geeignete Spanneinrichtung der eingangs genannten Art anzugeben, die so ausgebildet ist, daß sie auf einfache Weise im Maschinentisch montiert werden kann, ohne daß Abdichtungsprobleme auftreten, und wartungsfreundlich ist.

Diese Aufgabe ist bei einer Spanneinrichtung der eingangs genannten Art dadurch gelöst, daß der Kolben in einer einteilig ausgebildeten Buchse verschiebbar geführt ist, mit der er einen Druckraum bildet, und daß der Deckel einerseits an der Buchse und andererseits am Maschinentisch zentriert angeordnet und befestigt beziehungsweise befestigbar ist.

Dadurch, daß die erfindungsgemäße Spanneinrichtung als geschlossene Einheit ausgebildet ist, können die im Stand der Technik auftretenden Abdichtungsprobleme eliminiert werden. Weiterhin kann die Spanneinrichtung als standartisiertes Kompaktbauteil ausgebildet sein, wodurch die Herstellungskosten herabgesetzt werden können. Da die Positionierung der Spanneinrichtung über den Deckel erfolgt, ist es lediglich erforderlich, entsprechende Zentrierungen am Maschinentisch und am Deckel vorzusehen mit der Folge, daß Bearbeitungsungenauigkeiten im restlichen Bereich der Aufnahme nur beschränkt eine Rolle spielen. Ein möglicherweise zwischen der Aufnahme und der Buchse vorhandener Ringspalt wird von unten her mittels zwei O-Ringen gegen Öl bzw. Luft abgedichtet.

Die erfindungsgemäße Spanneinrichtung bietet den weiteren Vorteil, daß im Betrieb keine Verspannungen am Maschinentisch auftreten, da die Spann- bzw. Lösekräfte vollständig innerhalb der Spanneinrichtung aufgenommen werden. Im übrigen ist die Lebensdauer der Spanneinrichtungen deutlich erhöht, da beispielsweise Lunkerbildungen im Maschinentisch für die Funktion der Spanneinrichtung keine Rolle spielen.

Die Zentrierung des Deckels am Maschinentisch sowie der Buchse kann auf unterschiedliche Arten erfolgen. Als vorteilhaft hat es sich erwiesen, am Deckel einen in die Buchse eingreifenden Zentrieransatz vorzusehen, wobei dann zwischen Deckel und Buchse zweckmäßigerweise ein Dichtungselement angeordnet ist. Zur Zentrierung des Dekkels am Maschinentisch kann der Außenrand des Deckels als Zentrierrand ausgebildet sein, der mit einer am Maschinentisch vorgesehenen Vertiefung eine Passung bildet. Dabei ist der Deckel zumindest teilweise, insbesondere aber vollständig in den Maschinentisch versenkbar, so daß er bündig mit der Tischoberfläche abschließt. Die Versorgung der Spanneinrichtung mit einem Hydraulikmittel und gegebenenfalls mit Luft erfolgt zweckmäßigerweise im Bodenbereich der Buchse, da hier die Abdichtung zwischen Buchse und Aufnahme am einfachsten erfolgen kann.

Hinsichtlich weiterer vorteilhafter Ausgestaltungen der Erfindung wird auf die Unteransprüche sowie die nachfolgende Erläuterung eines Ausführungsbeispiels unter Bezugnahme auf die beiliegende Zeichnung verwiesen. In der Zeichnung zeigt die einzige Figur eine Ausführungsform einer erfindungsgemäßen Spanneinrichtung mit eingesetztem und festgespanntem Einzugsbolzen im Längsschnitt.

Zu der Spanneinrichtung 1, die an einem Maschinentisch 2, einer Grundplatte oder dergleichen montiert sein kann, gehört eine als Zylinder ausgebildete Buchse 3, die an ihrem oberen Ende offen und in eine Ausnehmung 2a des Maschinentisches 2 eingesetzt ist. In die Zylinderbohrung 4 der Buchse 3 ist unter Bildung eines Druckraumes 5 ein Kolben 6 axial bewegbar eingesetzt, wobei der Ringspalt zwischen Zylinderbohrung 4 und Kolben 6 durch einen O-Ring 7 abgedichtet ist. In den Boden der Zylinderbohrung 4 mündet ein in der Buchse 3 ausgebildeter Hydraulikmittelkanal 8, durch welchen dem Druckraum 5 über eine im Maschinentisch 2 vorgesehene Zuführleitung ein Hydraulikmittel wie beispielsweise Öl zugeführt werden kann. Zwischen dem Boden der Buchse 3 und dem Boden der Ausnehmung 2a ist ein Dichtungselement 25 vorgesehen, das Leckagen des Öls verhindert.

Die offene Oberseite der Buchse 3 ist durch einen Deckel 9 verschlossen, der an der Buchse 3 festgeschraubt und zentriert gehalten ist, wozu der Deckel 9 buchsenseitig einen Zentrieransatz 9a aufweist, der paßgenau zum Innendurchmesser der Buchse 3 dimensioniert ist.

Die Befestigung der Spanneinrichtung 1 am Maschinentisch 2 erfolgt ebenfalls über den Deckel 9, der am Maschinentisch 2 festgeschraubt ist. Dabei greift er, wie in der Zeichnung gut erkennbar ist, in eine Vertiefung 2b des Maschinentischs 2 so ein, daß er etwa bündig mit der Tischoberfläche abschließt. In der Vertiefung 2b ist der Deckel 9 zentriert gehalten, wozu der Außenrand des Dekkels 9 als Zentrierrand ausgebildet ist, der mit der Vertiefung 2b eine Passung bildet. Auch in der Tiefe sind Deckel 9 und Vertiefung 2b toleriert. Die Vertiefung 2b und die Ausnehmung 2a können auch einen definiert vergrößerten Durchmesser haben, wodurch es möglich ist, den Zylinder noch exakter mittels Ausgießen in Stichmaßgenauigkeit zu bringen.

Alternativ zu dieser Ausführungsform kann der Deckel 9 auch anderweitig am Maschinentisch 2 zentriert sein, wobei dann der Spalt zwischen Deckel 9 und Maschinentisch 2 mit einem 2-Komponenten Kunststoffmaterial ausgegossen wird.

Zwischen dem Deckel 9 und dem Kolben 6 ist weiterhin ein Tellerfederpaket 10 angeordnet, das den Kolben 6 in Richtung des Bodens der Zylinderbohrung 4 nach unten beaufschlagt.

In der dem Druckraum 5 gegenüberliegenden Oberseite des Kolbens 6 ist eine Sackbohrung vorgesehen, die eine Aufnahme 11 für einen Einzugsbolzen 12 bildet, der in die Aufnahme 11 durch eine im Deckel 9 vorgesehene Durchgangsbohrung 13 eingesetzt ist. Zur Erleichterung und Führung dieses Einsetzvorganges ist in der Durchgangsbohrung 13 ein hülsenförmiges Führungselement 14 vorgesehen, und zur exakten Positionierung des Einzugsbolzens 12 in der Spanneinrichtung 1 ist im oberen Bereich der Durchgangsbohrung 13 in Passung zu einem Flansch 12a des Einzugsbolzens 12 dimensioniert.

Zur Fixierung des Einzugsbolzens 12 in der Aufnahme 11 ist ein Spannmechanismus vorgesehen. Dieser umfaßt in an sich bekannter Weise einen in die Aufnahme 11 eingesetzten Kugelkäfig 15, in dem mehrere Kugeln 16 radial verstellbar gehalten sind, die je nach Kolbenstellung in eine Nut 17 in der Wandung der Aufnahme 11 nach außen ausweichen können, so daß ein Einzugsbolzen 12 in den Kugelkäfig 15 eingesetzt und aus diesem herausgenommen werden kann, oder durch die Wandung der Aufnahme 11 an einem solchen Ausweichen gehindert und damit in Eingriff mit der entsprechenden Gegenfläche, am Einzugsbolzen 12 gehalten wird, wie dies in der Zeichnung dargestellt ist.

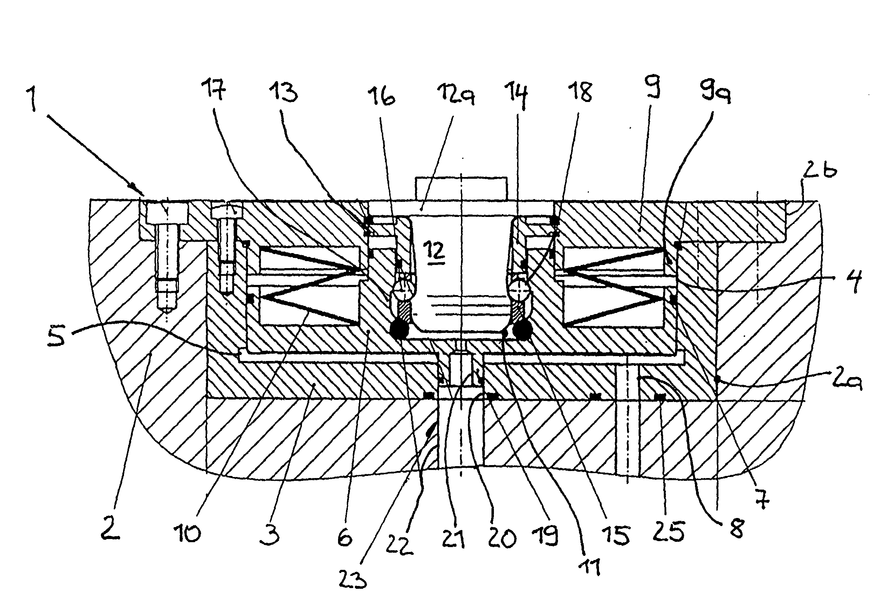

In der Zeichnung zeigt die Figur 1 die Spanneinrichtung 1 in ihrer Spannstellung, in der der Druckraum 5 drucklos ist und der Kolben 6 durch das Tellerfederpaket 10 nach unten gedrückt wird, so daß eine obere Schrägfläche 18 der Nut 17 die Kugeln 16 in Eingriff mit dem Einzugsbolzen 12 halten. Wenn jetzt der Druckraum 5 über den Hydraulikmittelkanal 8 mit Druckmittel beaufschlagt wird, wird der Kolben 6 entgegen der Rückstellkraft des Tellerfederpakets 10 nach oben in eine Lage gedrückt, in der die Nut 17 den Kugeln 16 Raum läßt, radial nach außen auszuweichen, so daß der Einzugsbolzen 12 aus der Spanneinrichtung 1 herausgenommen beziehungsweise dann wieder in diese eingesetzt werden kann. Der Hub des Kolbens 6 ist dabei so gewählt, daß der Einzugsbolzen 12 durch den Boden der Aufnahme 11 nach oben gedrückt wird, um das Entfernen des Einzugsbolzens 12 zu erleichtern.

An seiner druckraumseitigen Stirnfläche weist der Kolben 6 einen Ansatz 19 auf, der in einer im Boden der Zylinderbohrung 4 ausgebildete Ausnehmung 20 verschiebbar geführt und gegenüber dieser abgedichtet ist. Die Ausnehmung 20 besitzt zusammen mit einem in dem Ansatz 19 vorgesehenen, die Ausnehmung 20 mit dem Boden der Aufnahme 11 für den Einzugsbolzen 12 verbindenden, düsenartig ausgebildeten Kanalabschnitt 21, um mit einem sich im Maschinentisch 2 erstreckenden Kanalabschnitt 22 einen Lufteinlaßkanal 23 zu bilden, der an eine nicht dargestellte Druckluftquelle angeschlossen ist. Durch diesen Lufteinlaßkanal 23 kann beim Einsetzen eines Einzugsbolzens 12 in die Spanneinrichtung 1 oder Herausnehmen des Einzugsbolzens 12 Druckluft in die Aufnahme 11 eingeblasen werden, um auf diese Weise die Aufnahme 11 mit dem Kugelkäfig und den Einzugsbolzen 12 von Spänen oder sonstigen Verunreinigungen insbesondere im Bereich der Paßflächen und des Spannmechanismus zu säubern. Hierdurch können in zuverlässiger Weise verschmutzungsbedingte Beeinträchtigungen der Systemgenauigkeit vermieden werden.

## Patentansprüche

1. Spanneinrichtung (1) zur Fixierung eines Einzugsbolzens (12) an einem Maschinentisch (2), einer Grundplatte oder dergleichen, mit einem Kolben (6), der axial verstellbar in einer Ausnehmung (2a) des Maschinentisches (2) angeordnet und hydraulisch betätigbar ist, und einem am Maschinentisch (2) fixierbaren Dekkel (9), um die Ausnehmung (2a) zu verschließen, wobei der Kolben (6) und/oder der Deckel (9) eine Aufnahme (11) bilden, in die ein Einzugsbolzen (12) durch den Deckel (9) eingesetzt werden kann und in der er mittels eines durch Verstellung des Kolbens (6) betätigbaren Spannmechanismus fixierbar ist, **dadurch gekennzeichnet, daß** der Kolben (6) in einer einteilig ausgebildeten Buchse (3) verschiebbar geführt ist, mit der er einen Druckraum (5) bildet, und daß der Deckel (9) einerseits an der Buchse (3) und andererseits am Maschinentisch (2) zentriert angeordnet und befestigt beziehungsweise befestigbar ist.

2. Spanneinrichtung nach Anspruch 1, **dadurch gekennzeichnet, daß** der Deckel (9) einen in die Buchse (3) eingreifenden Zentrieransatz (9a) aufweist.

3. Spanneinrichtung nach Anspruch 1 oder 2, **dadurch gekennzeichnet, daß** zwischen Deckel (9) und Buchse (3) ein Dichtungselement angeordnet ist.

4. Spanneinrichtung nach einem der vorherigen Ansprüche, **dadurch gekennzeichnet, daß** der Außenrand des Deckels (9) einen Zentrierrand bildet, der mit einer am Maschinentisch (2) vorgesehenen Vertiefung (2b) eine Passung bildet.

5. Spanneinrichtung nach einem der vorherigen Ansprüche, **dadurch gekennzeichnet, daß** der Deckel (9) mit dem Maschinentisch (2) verschraubbar ist.

6. Spanneinrichtung nach einem der vorherigen Ansprüche, **dadurch gekennzeichnet, daß** der Deckel (9) mit der Buchse (3) verschraubt ist.

7. Spanneinrichtung nach einem der vorherigen Ansprüche,
**dadurch gekennzeichnet, daß** der Deckel (9) zumindest teilweise in den Maschinentisch (2) versenkbar ist.

8. Spanneinrichtung nach Anspruch 7, **dadurch gekennzeichnet, daß** der Deckel (9) vollständig in den Maschinentisch (2) versenkbar ist, so daß er bündig mit der Tischoberfläche abschließt.

## Claims

1. A clamping device (1) for fastening a draw-in bolt (12) to a machine table (2), a baseplate, or the like, having a piston (6) that is arranged axially displaceably in a recess (2a) of the machine table (2) and is hydraulically actuable, and having a cover (9) that is fastenable to the machine table (2) in order to close *off* the recess (2a), the piston (6) and/or the cover (9) forming a receptacle (11) into which a draw-in bolt (12) can be inserted through the cover (9) and in which it can be fastened by way of a clamping mechanism that is actuable by displacement of the piston (6), wherein the piston (6) is guided displaceably in an integrally configured bushing (3) with which it forms a pressure space (5); and the cover (9) is arranged centeredly and fastened or fastenable on the one hand on the bushing (3) and on the other hand on the machine table (2).

2. The clamping device as defined in Claim 1, wherein the cover (9) has a centering extension (9a) which engages into the bushing (3).

3. The clamping device as defined in Claim 1 or 2, wherein a sealing element (25) is arranged between cover (9) and bushing (3).

4. The clamping device as defined in one of the previous claims, wherein the outer rim of the cover (9) forms a centering rim which forms a fit with a depression (2b) provided on the machine table (2).

5. The clamping device as defined in one of the previous claims, wherein the cover (9) can be bolted to the machine table (2).

6. The clamping device as defined in one of the previous claims, wherein the cover (9) can be bolted to the bushing (3).

7. The clamping device as defined in one of the previous claims, wherein the cover (9) can be at least partially recessed into the machine bed (2).

8. The clamping device as defined in Claim 7, wherein the cover (9) can be completely recessed into the machine bed (2), so that it terminates flush with the table surface.

## Revendications

1. Dispositif de serrage (1) pour fixer un axe rentrant (12) sur une table de machine-outil (2), une plaque de base ou analogues, comprenant un piston (6) qui est disposé dans un évidement (2a) de la table de machine-outil (2) de façon à être mobile axialement et qui peut être actionné par un système hydraulique, et un couvercle (9) pouvant être fixé sur la table de machine-outil (2) afin de fermer l'évidement (2a), sachant que le piston (6) et/ou le couvercle (9) forment un logement (11) dans lequel il est possible de placer un axe rentrant (12) en le faisant passer à travers le couvercle (9) et de l'immobiliser au moyen d'un mécanisme de serrage pouvant être actionné par le déplacement du piston (6), **caractérisé en ce que** le piston (6) est guidé de façon mobile dans une douille (3) réalisée d'un seul tenant, avec laquelle il forme une chambre de compression (5), et **en ce que** le couvercle (9) est disposé et fixé, ou peut être fixé, de façon centrée, d'une part, à la douille (3) et, d'autre part, à la table de machine-outil (2).

2. Dispositif de serrage selon la revendication 1, **caractérisé en ce que** le couvercle (9) présente une saillie de centrage (9a) s'enfonçant dans la douille (3).

3. Dispositif de serrage selon la revendication 1 ou 2, **caractérisé en ce qu'**entre couvercle (9) et douille (3) est placée une garniture d'étanchéité.

4. Dispositif de serrage selon l'une des revendications précédentes, **caractérisé en ce que** le bord extérieur du couvercle (9) constitue un rebord de centrage qui est ajusté à un renfoncement (2b) dans la table de machine-outil (2).

5. Dispositif de serrage selon l'une des revendications précédentes, **caractérisé en ce que** le couvercle (9) peut être vissé à la table de machine-outil (2).

6. Dispositif de serrage selon l'une des revendications précédentes, **caractérisé en ce que** le couvercle (9) est vissé à la douille (3).

7. Dispositif de serrage selon l'une des revendications précédentes, **caractérisé en ce que** le couvercle (9) peut être au moins en partie noyé dans la table de machine-outil (2).

8. Dispositif de serrage selon la revendication 7, **caractérisé en ce que** le couvercle (9) peut être entièrement noyé dans la table de machine-outil (2), de manière à ce qu'il se termine en affleurement avec la surface de la table.
